(19) Europäisches Patentamt / European Patent Office / Office européen des brevets

(11) **EP 2 649 436 B1**

(12) **FASCICULE DE BREVET EUROPEEN**

(45) Date de publication et mention de la délivrance du brevet:
**09.08.2017 Bulletin 2017/32**

(21) Numéro de dépôt: **11807712.2**

(22) Date de dépôt: **06.12.2011**

(51) Int Cl.:
*G01N 23/04* *(2006.01)*    *G01N 23/20* *(2006.01)*

(86) Numéro de dépôt international:
**PCT/FR2011/000638**

(87) Numéro de publication internationale:
**WO 2012/076770 (14.06.2012 Gazette 2012/24)**

(54) **PROCÉDÉ D'EXTRACTION D'UN SPECTRE DE DIFFUSION PREMIER**

VERFAHREN ZUR EXTRAKTION EINES ERSTEN STREUUNGSSPEKTRUMS

METHOD OF EXTRACTING A PRIME SCATTERING SPECTRUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2010 FR 1060121**

(43) Date de publication de la demande:
**16.10.2013 Bulletin 2013/42**

(73) Titulaire: **Commissariat à l'Énergie Atomique et aux Énergies Alternatives
75015 Paris (FR)**

(72) Inventeurs:
- **TABARY, Joachim
  38100 Grenoble (FR)**
- **RINKEL, Jean
  91440 Bures-Sur-Yvette (FR)**

(74) Mandataire: **Santarelli
49, avenue des Champs-Elysées
75008 Paris (FR)**

(56) Documents cités:
- **ALEXANDER FLISCH ET AL: "Correction of scattered radiation for cone-beam computed tomography at high X-ray energies", NUCLEAR SCIENCE SYMPOSIUM CONFERENCE RECORD, 2008. NSS '08. IEEE (19-25 OCT. 2008), IEEE, PISCATAWAY, NJ, USA, 19 octobre 2008 (2008-10-19), pages 547-554, XP031419500, ISBN: 978-1-4244-2714-7**
- **THIERRY R ET AL: "Hybrid simulation of scatter intensity in industrial cone-beam computed tomography", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 598, no. 2, 11 janvier 2009 (2009-01-11), pages 611-619, XP025800974, ISSN: 0168-9002, DOI: 10.1016/J.NIMA.2008.10.011 [extrait le 2008-10-22]**
- **EVANS B L ET AL: "Demonstration of energy-coded Compton scatter tomography with fan beams for one-sided inspection", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 480, no. 2-3, 21 mars 2002 (2002-03-21), pages 797-806, XP004345495, ISSN: 0168-9002, DOI: 10.1016/S0168-9002(01)01205-0**

**Description**

L'invention porte sur un procédé de traitement d'un spectre de rayonnement diffusé par un matériau exposé à un rayonnement incident, en vue de l'extraction du spectre de rayonnement diffusé premier. Elle porte également sur un dispositif de traitement associé et sur un programme d'ordinateur pour un tel procédé de traitement.

Le domaine d'application de l'invention s'étend en tout premier lieu à la spectrométrie de diffusion de rayons X ou gamma, avec notamment l'analyse des matériaux, mais comprend également d'autres spectrométries de diffusion. Une telle spectrométrie peut être utilisée dans l'étude des matériaux, par exemple la détection des explosifs.

La spectrométrie de diffusion de rayons X est basée sur l'exposition d'un matériau à un rayonnement X incident d'énergie de quelques dizaines à quelques centaines de keV. Les photons X, quand ils rencontrent le matériau sur lequel ils sont projetés, induisent différents types d'interactions avec celui-ci : fluorescence ou conversion interne (effet photoélectrique au cours duquel le photon transfert toute son énergie au matériau qui la restitue ensuite), diffusion inélastique (ou effet Compton qui inclut un changement de la direction du photon ainsi qu'une diminution de son énergie), création de paires positon - électron (uniquement pour des rayons X de très grande énergie non considérés dans la présente invention), ou diffusion Rayleigh (ou diffusion élastique, minoritaire aux énergies considérées).

L'invention s'applique préférentiellement au traitement de signaux produits par des tubes X délivrant des photons dont l'énergie est comprise entre zéro et 300 keV. De tels photons diffusent dans la matière.

Certaines caractéristiques des matériaux étudiés (coefficient d'absorption $\mu$ (E), densité, rapport $\dfrac{Z}{A}$ entre le numéro atomique Z et le nombre de masse atomique A, ainsi que la composition chimique notamment) peuvent être déterminées sur la base de connaissances théoriques et de l'obtention du spectre diffusé premier du matériau exposé à un rayonnement X, c'est-à-dire le spectre de diffusion qui serait obtenu dans une situation où chaque photon n'interagirait qu'une seule fois avec le matériau. La demande de brevet FR 09 55011, déposée le 20 juillet 2009, montre par exemple comment on peut déterminer certaines caractéristiques de matériau en analysant le spectre en énergie d'un rayonnement diffusé par ce matériau, ce dernier étant soumis à une irradiation par un rayonnement X.

Or, les spectres de diffusion X comportent une composante importante de photons diffusés ayant interagi plusieurs fois avec le matériau. Cette composante est appelée le spectre de diffusé multiple.

Certaines informations, notamment la densité du matériau, peuvent être obtenues sur la base du spectre de diffusé total car le caractère atténuant du matériau affecte d'une manière similaire les deux composantes, première et multiple, du spectre de diffusion. Pour l'obtention d'une meilleure estimation de cette densité ou d'autres informations physico-chimiques, on constate que l'utilisation du spectre de diffusion total mène à des résultats imparfaits.

Le document WO2007/007247 enseigne d'utiliser un système où l'objet étudié est placé entre une source de rayonnement et une matrice de détecteurs pixellisés. Une calibration du détecteur est effectuée sur la base des lignes caractéristiques de la source, et une évaluation du diffusé multiple est faite pour chacune de ces lignes caractéristiques avant d'être extrapolée à tout le spectre.

L'invention se place dans un autre contexte, puisqu'elle s'applique en premier lieu à un système d'analyse avec une source de rayonnement fortement collimatée, et un détecteur placé dans le même demi-espace que la source vis-à-vis de la surface de matériau étudiée, et également fortement collimaté.

L'invention a pour objet de remédier, dans le contexte de cet agencement analytique, au problème évoqué ci-dessus, en proposant un procédé de correction du spectre de rayonnement diffusé total pour en extraire le rayonnement diffusé premier, c'est-à-dire un rayonnement n'ayant diffusé qu'une seule fois dans le matériau analysé avant d'être détecté.

Pour ce faire, il est proposé un comme revendiqué dans la revendication 1. Selon un aspect de l'invention, la fonction spectrale de réponse fournit un spectre discrétisé sur un nombre fini de plages d'énergie.

Selon un aspect avantageux de l'invention, le processus itératif est poursuivi jusqu'à la satisfaction d'un critère de convergence portant sur les spectres diffusés premiers estimés successifs ou, en variante, jusqu'à exécution d'un nombre prédéterminé d'itérations

Selon un mode de réalisation, la fonction spectrale de réponse est le résultat d'une interpolation d'une pluralité de fonctions spectrales de réponse à une exposition monochromatique de différents matériaux pour la profondeur donnée en considérant uniquement la densité du matériau.

Selon un autre mode de réalisation, la fonction spectrale de réponse est le résultat d'une interpolation d'une pluralité de fonctions spectrales de réponse du matériau pour différentes profondeurs.

Il est aussi proposé que la fonction spectrale de réponse soit préalablement obtenue par une acquisition expérimentale d'une réponse du matériau pour la profondeur donnée.

Selon un aspect de l'invention, on procède aussi à une étape préliminaire d'estimation d'un premier spectre de diffusé premier estimé, par multiplication d'un spectre de diffusion total mesuré par un coefficient multiplicatif dépendant de la profondeur d'inspection.

L'invention consiste également en un dispositif comme revendiqué dans la revendication 9. Avantageusement et selon l'invention, la source de rayonnement et le détecteur sont tous deux fortement collimatés. Par ailleurs, en variante combinaison, le détecteur est de préférence placé dans le même demi-espace que la source de rayonnement vis-à-vis de la surface irradiée du matériau à analyser.

L'invention s'étend également à un dispositif d'analyse spectrométrique comprenant un tel dispositif d'extraction de spectre de rayonnement diffusé premier.

Il est également proposé un programme d'ordinateur comprenant une suite d'instructions aptes, lorsqu'elles sont exécutées par un microprocesseur, à mettre en oeuvre un procédé selon l'invention.

Celle-ci va maintenant être décrite en relation avec les figures annexées, à titre d'illustrations non limitatives.

La figure 1 représente un mode de réalisation d'un dispositif selon l'invention.
La figure 2 représente la décomposition générale des spectres de diffusion.
La figure 3 représente une réponse spectrale à une exposition monochromatique d'un matériau telle qu'envisagée dans l'invention.
La figure 4 représente une étape d'un mode de réalisation d'un procédé selon l'invention.
La figure 5 représente une étape ultérieure du même procédé.
La figure 6 représente une étape d'un premier mode de réalisation particulier de l'invention.
Les figures 7 et 8 représentent des résultats obtenus avec le premier mode de réalisation particulier de l'invention.
La figure 9 représente deux fonctions mises en oeuvre dans un deuxième mode de réalisation particulier de l'invention.
La figure 10 représente des résultats obtenus pour le deuxième mode de réalisation particulier de l'invention.
La figure 11 représente la confrontation entre des résultats obtenus avec le procédé selon l'invention et des mesures obtenues par ailleurs.

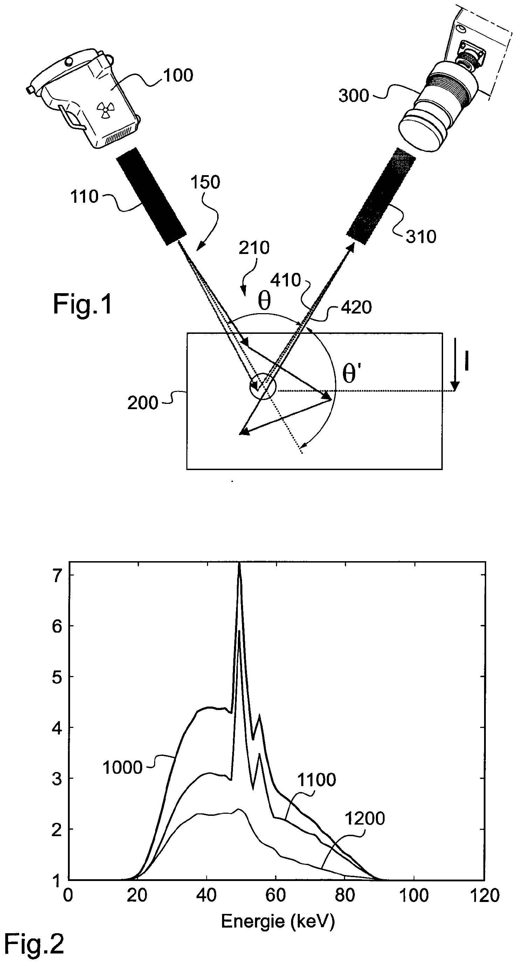

La figure 1 représente l'agencement matériel mis en oeuvre au cours d'un procédé selon l'invention. Une source 100 émet un rayonnement X 150 qui est collimaté par un collimateur 110. Le rayonnement 150 forme un faisceau dont l'angle d'ouverture est très faible, typiquement quelques degrés, autour de l'axe central du collimateur de la source. La source 100 est monoénergétique, ou polyénergétique, et émet des photons de manière continue sur toute une gamme d'énergie. Le faisceau est projeté sur un volume de matériau 200 par une surface du matériau 210.

Les photons X interagissent avec le matériau suivant les différents phénomènes physiques évoqués en introduction. Certains des photons interagissent très près de la surface alors que d'autres s'enfoncent profondément dans le matériau. Un détecteur 300 équipé d'un collimateur 310 observe la surface 210 du matériau 200 et mesure l'énergie des photons que son angle de collimation lui permet de recevoir.

Le positionnement relatif de la source 100 et du détecteur 300 ainsi que leur positionnement vis-à-vis du matériau 200 et leurs angles de collimation respectifs définissent une profondeur d'analyse dans le matériau 200, qui est telle que les photons mesurés par le détecteur 300 proviennent d'un volume du matériau 200 dit volume d'inspection. Ce volume est déterminé par l'intersection entre les angles solides sous lesquels la source et le détecteur voient le volume de matériau 200. Les axes de collimation respectifs de la source et du détecteur se croisent dans le matériau analysé. La profondeur d'analyse, ou profondeur d'inspection, correspond à la distance entre la surface du matériau et cette intersection. L'angle entre les deux axes de collimation est noté $\theta$. Le détecteur détecte les photons émis par la source et ayant diffusé selon un angle $\theta' = \pi - \theta$ dans le volume d'inspection. Lorsque $\theta' = 0$, il n'y a pas de diffusion inélastique : le photon suit une trajectoire rectiligne.

La source 100 et le détecteur 300 étant disposés du même côté de la surface 210, on parle de spectre de diffusion en arrière ou spectre de rétrodiffusion.

En figure 2, on a représenté le spectre de diffusion mesuré pour un matériau 200 donné. En abscisses est figurée l'énergie des photons qui s'étale typiquement de 20 à 100 keV, et en ordonnées, on a représenté l'intensité du rayonnement détecté pour une énergie donnée en unité arbitraire. Le spectre de diffusion totale 1000 se décompose en un spectre de diffusion premier 1100 et un spectre de diffusion multiple 1200 comme évoqué en introduction.

En figure 1, on a représenté la trajectoire d'un photon diffusé premier 410. Par définition, sa trajectoire ne change qu'une fois : il ne subit qu'une seule diffusion avant d'atteindre le détecteur. Celle-ci se fait selon l'angle de diffusion $\theta'$, et se produit dans le volume d'inspection. Les photons tels que celui précédemment évoqué forment le rayonnement de diffusion premier selon l'angle $\theta'$, constitué de photons n'ayant diffusé qu'une fois, selon cet angle de diffusion $\theta'$, dans le volume d'inspection.

On a également représenté la trajectoire d'un photon diffusé multiple qui fait l'objet de plusieurs interactions avec le matériau 200 et qui change de trajectoire à chacune de ces interactions. Il subit alors de multiples diffusions avant d'atteindre le détecteur. On parle alors d'un rayonnement diffusé multiple, car constitué de photons ayant diffusé plus d'une fois avant d'atteindre le détecteur.

On précise que d'autres photons ressortent du volume de matériau 200, à l'instar des photons 410 et 420, sous d'autres angles et ne sont pas mesurés par le détecteur 300. Ils n'apparaissent donc pas sur les spectres de la figure 2.

Une partie du rayonnement diffusé premier et du rayonnement diffusé multiple est détectée par le détecteur. Ce dernier n'est pas capable de distinguer ces deux composantes. Ainsi, le détecteur détermine un spectre de rayonnement en énergie, du rayonnement diffusé total, noté DT. Ce dernier est composé d'une composante correspondant au spectre de diffusion premier, noté DP, et précédemment défini et d'une composante correspondant au spectre de diffusion multiple, noté DM, précédemment défini.

Ainsi, le spectre de diffusion total est la somme du spectre de diffusion premier et du spectre de diffusion multiple.

$$DT = DP + DM$$

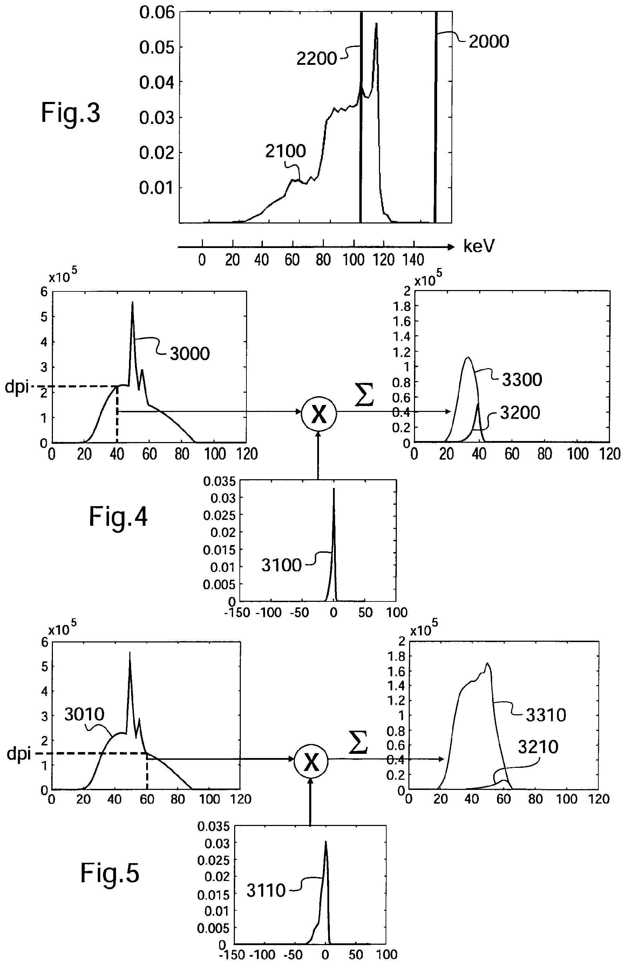

En figure 3, on a représenté la réponse spectrale de rayonnement diffusé en réaction à une exposition monochromatique du matériau 200 dans l'agencement de la figure 1. Le matériau utilisé pour l'exemple est du Delrin (marque déposée) et l'excitation monochromatique 2000 est effectuée à 150 keV. Le volume d'inspection est à une profondeur de 4 cm, l'angle entre le faisceau incident et l'axe de collimation du détecteur étant de 120°. On constate que, comme attendu, la réponse spectrale 2100 est composée uniquement d'énergies inférieures à celle de l'excitation monochromatique 2000.

Dans un système d'analyse tel qu'en figure 1, c'est-à-dire utilisant une mesure de rétrodiffusion et une collimation à la fois de la source et du détecteur, le spectre de diffusé premier en réponse à une excitation monochromatique est lié de manière bijective à l'énergie de l'activation, et est essentiellement monochromatique. Il apparaît sous la référence 2200 en figure 3.

Ainsi, en dehors de l'énergie mesurée à très grande proximité d'une valeur d'énergie correspondant à l'ensemble du spectre de diffusion premier 2200, qui en figure 3 est de 104,14 keV, l'ensemble du spectre de diffusion 2100 est constitué de la composante de diffusé multiple DM.

On représente ce spectre DM sous une forme discrétisée sur un nombre limité n de canaux d'énergie de détection, par un vecteur colonne $\begin{pmatrix} a_1 \\ a_j \\ ... \\ a_n \end{pmatrix}$, $a_j$ étant l'intensité du rayonnement diffusé multiple à l'énergie $E_j$. Le vecteur dépend naturellement du matériau et de la profondeur d'analyse.

Le matériau peut être irradié selon un grand nombre d'énergies monochromatiques $E_{irradiation-i}$, chaque énergie $E_{irradiation-i}$ étant telle que le rayonnement diffusé premier, selon l'angle θ', détecté par le détecteur a une énergie $E_i$. L'ensemble des réponses du matériau à des excitations monochromatiques, discrétisées pour un nombre déterminé de canaux d'énergie de détection est présenté sous forme de la matrice de corrélation.

$$M = \begin{pmatrix} a_{11} & a_{1j} & .. & a_{1p} \\ a_{i1} & a_{ij} & .. & .. \\ ... & .. & .. & .. \\ a_{n1} & .. & .. & a_{np} \end{pmatrix}$$

Dans cette matrice, chaque valeur $a_{ij}$ correspond à la proportion de photons détectés constituant le rayonnement diffusé multiple, d'énergie $E_i$ lorsqu'on détecte un photon, d'énergie $E_j$, du rayonnement diffusé premier.

De cette façon, chaque somme de coefficients $a_{ij}$ selon une colonne j de cette matrice correspond au nombre de photons diffusés multiples détectés $N_{multiples-j}$ lorsqu'un photon diffusé premier à l'énergie $E_j$ est détecté.

$$N_{multiples-j} = \sum_i a_{i,j}$$

Chaque colonne $C_j$ de la matrice M représente le spectre en énergie du rayonnement diffusé multiple détecté lorsqu'on détecte un photon diffusé premier d'énergie $E_j$. Cette fonction est appelée fonction de réponse spectrale correspondant à la détection d'un photon diffusé premier d'énergie $E_j$.

Le procédé selon l'invention utilise la matrice de corrélation M pour extraire de manière itérative la composante de diffusés multiples dans le spectre de diffusion mesuré expérimentalement. Il s'agit d'un procédé itératif, permettant une estimation du spectre de diffusion premier DP. Ainsi, à chaque itération k, on réalise une estimation du spectre de diffusion premier notée $DP_k$. Cette estimation est réalisée en utilisant la matrice de corrélation précédemment définie, selon l'algorithme suivant :

$$DM_k = M * DP_{k-1} \qquad (1)$$

$$DP_k = DT - DM_k \qquad (2)$$

Avec:

- $DM_k$ : estimation du spectre de diffusion multiple lors de l'itération k ;
- $DP_{k-1}$ : estimation du spectre de diffusion premier établie à l'itération k-1 lorsque $k \neq 1$. Exceptionnellement, lorsque k = 1, $DP_{k-1}$ est l'estimation initiale du spectre de diffusion premier ;
- DT : spectre de diffusion total, c'est-à-dire spectre de diffusion mesuré par le détecteur.

Les itérations se poursuivent soit selon un nombre d'itérations prédéterminé, soit jusqu'à ce qu'un critère de convergence soit atteint, comme cela sera décrit plus bas.

Le procédé itératif comporte ainsi

- une estimation initiale du spectre diffusé premier (étape d'initialisation)
- une estimation du spectre de diffusion multiple $DM_k$ correspondant au spectre de diffusion premier de l'itération précédente $DP_{k-1}$, ou, lors de la première itération, de l'estimation initiale du spectre diffusé premier ($DP_0$). Cette estimation est réalisée à l'aide de la matrice de corrélation M,
- une nouvelle estimation du spectre de diffusion premier $DP_k$, effectuée en soustrayant le spectre diffusé multiple estimé $DM_k$ au spectre de diffusion mesuré DT,
- une nouvelle étape d'itération au cours de laquelle le spectre de diffusé multiple est évalué sur la base de l'estimation du spectre de diffusé premier.

Ainsi, suivant la méthode d'inversion du point fixe, on sépare les deux composantes dans le spectre mesuré physiquement.

Le spectre de diffusé premier initial, noté $DP_{k=0}$ est tout d'abord estimé sur la simple base du spectre de diffusion total DT mesuré, multiplié par un facteur d'atténuation globale, noté $\alpha$, compris entre 0.3 et 1 en fonction de la profondeur d'inspection, pour des matériaux de densité comprise entre 0.7 et 2.2. Pour une profondeur d'inspection de 2 cm, une valeur de 0.6 est utilisée, et pour une profondeur de 4 cm, la valeur est de 0.45. Ces valeurs peuvent être ajustées à chaque mise en oeuvre.

Ainsi,

$$DP_{k=0} = \alpha\, DT \qquad (3)$$

Connaissant le spectre diffusé total DT (il s'agit du spectre mesuré par le détecteur), et la valeur initiale d'estimation du spectre diffusé premier $DP_{k=0}$, on réalise les étapes (1) et (2) précédemment décrites, de façon itérative, jusqu'à ce que le critère de convergence soit atteint ou jusqu'à ce que le nombre d'itérations atteigne le nombre prédéterminé.

Un critère de convergence possible est une distance entre les estimations successives de deux spectres de diffusion premier, $DP_{k-1}$ et $DP_k$, cette distance pouvant être exprimée selon l'expression suivante.

$$\left\| DP_k - DP_{k-1} \right\| = \sqrt{\sum_E \left( DP_k(E) - DP_{k-1}(E) \right)^2} \leq \varepsilon \qquad (4)$$

Dans cette expression, le terme E désigne l'énergie et le terme $\varepsilon$ désigne le critère de convergence.

A chaque itération, le spectre de diffusé premier est représenté sous forme d'un vecteur $\begin{pmatrix} dp_1 \\ dp_2 \\ ... \\ dp_p \end{pmatrix}_k$ , et le diffusé multiple est également représenté sous forme d'un vecteur $\begin{pmatrix} dm_1 \\ dm_2 \\ ... \\ dm_n \end{pmatrix}_k$ Ce dernier se déduit sous forme de calcul matriciel par l'opération $\begin{pmatrix} dm_1 \\ dm_2 \\ ... \\ dm_n \end{pmatrix}_k = \begin{pmatrix} a_{11} & a_{12} & .. & a_{1p} \\ a_{21} & a_{22} & .. & .. \\ ... & .. & .. & .. \\ a_{n1} & .. & .. & a_{np} \end{pmatrix} . \begin{pmatrix} dp_1 \\ dp_2 \\ ... \\ dp_p \end{pmatrix}_{k-1}$ .

Les pas de discrétisation en énergie ainsi que la dimension des vecteurs précédemment décrits sont de préférence identiques. Egalement, le nombre de canaux n de discrétisation du spectre de diffusion multiple est, de préférence, choisi égal au nombre de canaux p du spectre de diffusion premier. Dans ce cas, la matrice M est carrée.

Le procédé itératif est illustré aux figures 4 et 5. La figure 4 représente la multiplication d'une intensité $dp_i$ du spectre de diffusé premier estimé 3000 à l'énergie i = 40 keV avec une colonne $a_{ij}$, j variant de 1 à n, représentée sous la référence 3100 en partie basse de la figure, le résultat étant une fraction 3200 du spectre de diffusé multiple estimé 3300, visible sur la partie droite de la figure 4 et exprimée sous la forme du vecteur $\begin{pmatrix} dm_1 \\ dm_2 \\ ... \\ dm_n \end{pmatrix}$ , que l'on additionne aux fractions de spectre calculées pour les valeurs d'énergie inférieures à i pour obtenir un total intermédiaire 3300.

La figure 5 représente la multiplication d'une autre intensité $dp_i$ du spectre de diffusé premier à l'énergie i avec une colonne $a_{ij}$, référencée 3110, le résultat étant une deuxième fraction du spectre de diffusé multiple estimé 3210, les différentes fractions étant ensuite additionnées pour obtenir le spectre de diffusé multiple estimé 3300.

Un élément important de l'invention est l'utilisation de la matrice de corrélation M, permettant d'estimer le spectre de diffusion multiple $DM_k$ correspondant à un spectre de diffusion premier $DP_k$ donné. Cette matrice doit être établie pour une position donnée de la source et du détecteur, par rapport à l'objet analysé. En outre, elle dépend des paramètres suivants :

- l'angle $\theta$ entre les axes de collimation du détecteur et de la source, qui conditionne l'angle de diffusion $\theta'$ ($\theta = \pi - \theta'$)
- la nature du matériau constituant l'objet analysé
- la profondeur du volume d'inspection, laquelle est déterminée par l'intersection des axes de collimation du détecteur et de la source.

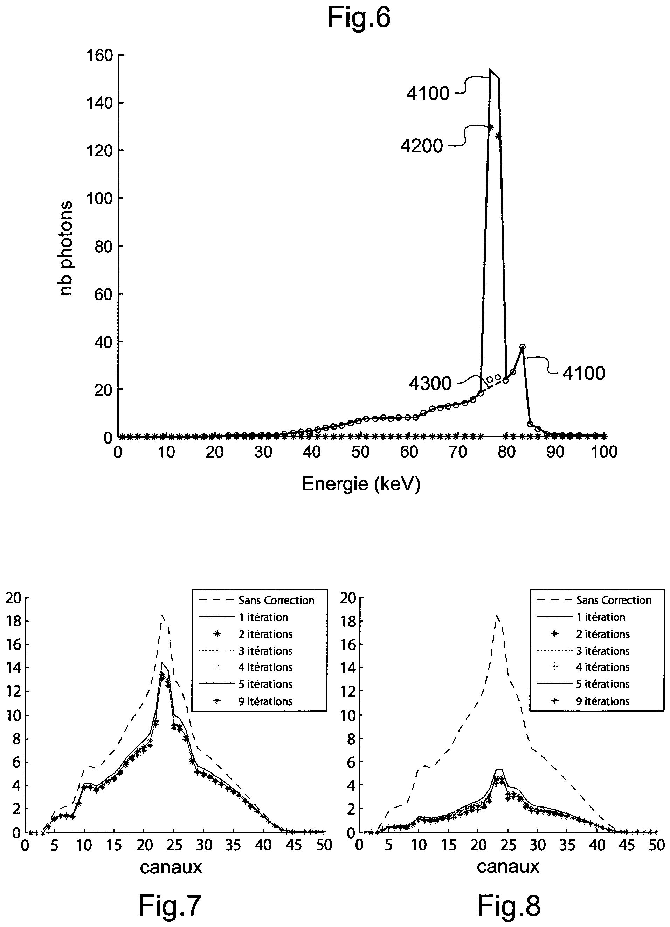

La matrice de corrélation M peut être construite expérimentalement, en utilisant, successivement, différentes sources de rayons X ou gamma monoénergétiques d'énergie $E_{irradiation-j}$, comme des sources radioactives dont les raies sont connues, ou un rayonnement synchrotron, qui a de plus l'avantage d'être de grande énergie. On mesure alors un spectre de diffusion total, tel que celui apparaissant en figure 6, et référencé 4100. On procède alors selon trois étapes :

Tout d'abord, on détermine le pic de diffusion premier. A partir du spectre de diffusion total 4100, on isole le pic 4200 correspondant au rayonnement de diffusion premier détecté. Ce pic s'étend de part et d'autre d'une énergie connue, $E_j$ correspondant à l'énergie de diffusion $E_{irradiation-j}$ du rayonnement monochromatique émis par la source selon l'angle de diffusion $\theta'$. Ce pic est d'autant plus fin que la source et le détecteur sont collimatés. De préférence, la largeur à mi-hauteur de ce pic correspond à une bande énergétique inférieure à quelques keV. Ce pic 4200 correspond à la composante du rayonnement de diffusion premier dans le spectre de diffusion total détecté.

Au cours d'une deuxième étape, on détermine le spectre de diffusion multiple. En retirant la composante de diffusion premier 4200 du spectre de diffusion total 4100, on obtient le spectre de diffusion multiple 4300. Pour cela, on détermine le fond "sous le pic", c'est-à-dire la courbe continue, par exemple linéaire, joignant les deux extrémités du spectre 4300 de part et d'autre de la base du pic 4200. On peut utiliser des algorithmes de détermination du signal sous un pic, couramment mis en oeuvre dans le domaine de la spectrométrie X ou gamma.

Enfin, au cours d'une troisième étape, on procède à une normalisation. On divise le spectre de diffusion multiple 4300 par la quantité de photons correspondant au pic de diffusion premier 4200. Le spectre de diffusion multiple ainsi normalisé correspond alors au spectre de diffusion multiple obtenu lorsqu'un photon du rayonnement diffusé premier est détecté. Ce spectre correspond aussi à une colonne $C_j$ de la matrice de corrélation M, dont l'indice j correspond à l'énergie $E_j$ du pic de diffusion premier observé, cette dernière étant déterminée par l'énergie $E_{irradiation-j}$ de la source de rayonnement et l'angle de diffusion θ'.

Les trois étapes ainsi décrites peuvent être réalisées non pas de façon expérimentale, mais par simulation, en utilisant par exemple un code de transport de particules de type MonteCarlo connu de l'homme du métier, et notamment MCNP, GEANT ou PENELOPE. En outre, la matrice de corrélation peut être constituée en combinant simulation et expérimentation..

En renouvelant cette opération en utilisant, ou en simulant, successivement différentes sources monoénergétiques, il est possible d'obtenir plusieurs colonnes de la matrice, correspondant à autant d'énergies de diffusion premier $E_j$, ces dernières étant calculées d'après la connaissance de l'angle de diffusion θ' et de l'énergie d'émission $E_{irradiation-i}$ de la source mise en oeuvre. Ces différentes colonnes peuvent être interpolées entre elles, par exemple de façon linéaire, afin de constituer une matrice complète, les pas de discrétisation en énergie entre chaque ligne et chaque colonne correspondant respectivement au pas de discrétisation en énergie du vecteur représentant un spectre de diffusion multiple et au pas de discrétisation en énergie du vecteur représentant le spectre de diffusion premier.

Une telle matrice est réalisée pour différentes configurations de mesure, en faisant varier les paramètres suivants :

- nature du matériau étalon
- position, dans le matériau étalon, de l'intersection des axes de collimation du détecteur et de la source, cette position correspondant à la profondeur d'inspection.

Ainsi, pour un angle de diffusion donné, on obtient une pluralité de matrices de corrélation M(nature, profondeur).

Par exemple, lorsque l'angle de diffusion θ' est de 120°, correspondant à un angle séparant les axes de collimation θ de 60°, on peut simuler le spectre de diffusion multiple correspondant à une source monoénergétique dont l'énergie varie entre 10 et 150 keV, par pas de 10 keV. Quinze simulations sont alors nécessaires. Cela correspond à des photons de diffusion premier d'énergies comprise entre 9.7 keV (lorsque l'énergie de la source est égale à 10 keV) et 104.14 keV (lorsque l'énergie de la source est égale à 150 keV). La matrice est ensuite complétée par interpolation.

On constitue de telles matrices pour différents matériaux étalons, ces derniers pouvant être le polyéthylène, l'eau, le Plexiglas (marque déposée), le nylon (marque déposée), le Delrin, la cellulose, le Kynar (marque déposée), le nitrate d'ammonium ou le Téflon (marque déposée). Pour chaque matériau, on détermine une matrice de corrélation par profondeur d'inspection, cette dernière variant par exemple de 0 à 7 cm, par pas de 0.5 cm.

Pour un même matériau, on peut également interpoler des matrices selon la profondeur.

La figure 7 présente un exemple de mise en oeuvre du procédé itératif d'estimation du spectre de diffusion premier, précédemment décrit, en utilisant un matériau en plexiglas et une profondeur de 2 cm. On constate une excellente convergence de cette estimation. La convergence est ici estimée par calcul d'une distance normalisée entre deux spectres de diffusé premier estimés successifs et comparaison entre cette distance et une valeur de seuil ε suivant une formule du type $\mathbf{type} \left\| DP_k - DP_{k-1} \right\| = \sqrt{\sum_E \left( DP_k(E) - DP_{k-1}(E) \right)^2} \leq \varepsilon$ . Elle est atteinte après 5 itérations.

La figure 8 présente également la convergence du spectre de diffusé premier estimé pour du plexiglas étudié à 4 cm de profondeur. On constate une bonne convergence quelle que soit l'importance de la diffusion multiple par rapport à la diffusion première.

Les matériaux à explorer ne figurant pas dans la base de données préétablie font l'objet, pour la détermination de leur matrice de corrélation, d'une interpolation, à partir des matrices constituant cette base, selon leur densité. L'interpolation a pour objet chaque coefficient de la matrice de corrélation M, et peut être une interpolation linéaire.

Les résultats obtenus par cette approximation sont excellents, car dans le système analytique de la figure 1, il est constaté expérimentalement que la répartition spectrale de la diffusion multiple pour une énergie de rayonnement incident ne dépend pas du matériau, ce qui permet de réduire les matériaux à étudier à leur densité, qui détermine l'atténuation sur l'ensemble de la gamme spectrale, pour la préparation de la matrice de corrélation.

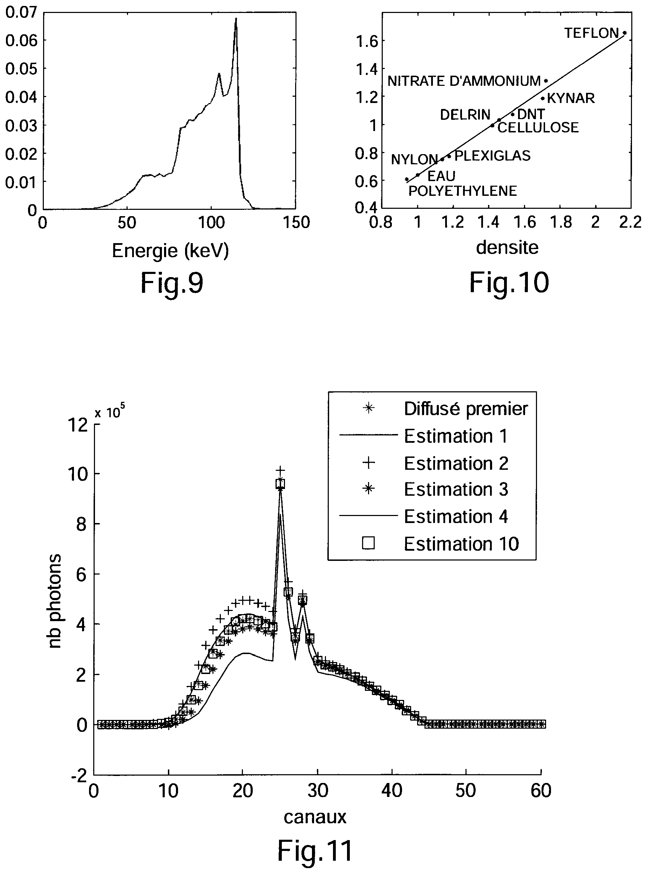

La figure 9 présente la répartition spectrale de la diffusion multiple pour un diffusé premier à 104.14 keV, qui ne dépend pas du matériau, et la figure 10 présente la fonction d'atténuation pour la même valeur d'énergie de diffusé premier.

Des interpolations peuvent être également réalisées pour les valeurs d'énergie incidente et la profondeur, de manière à adapter la matrice M utilisée effectivement aux valeurs précises de la situation étudiée.

Le procédé de traitement de spectre décrit dans cette demande peut être appliqué sur un matériau inconnu, mais de densité connue, ou estimée. On sélectionne une matrice déjà constituée, correspondant à un matériau dont la densité est proche de celle du matériau inconnu. L'extraction du spectre de diffusion premier peut permettre de déterminer plus précisément la nature de ce matériau, par exemple en suivant le procédé décrit dans la demande de brevet FR 09 55011, déposée le 20 juillet 2009, précédemment citée. Il est alors possible de refaire une extraction du spectre de diffusion premier à l'aide d'une matrice tenant compte de la nature précise du matériau, telle que celle-ci a été précédemment déterminée.

La figure 11 présente l'excellente convergence constatée pour la détermination du spectre de diffusé premier dans ce mode de réalisation, dans le cas de l'étude d'un volume de plexiglas à 3 cm de profondeur. La convergence est atteinte en moins de 10 itérations, avec un phénomène d'oscillations autour du spectre final.

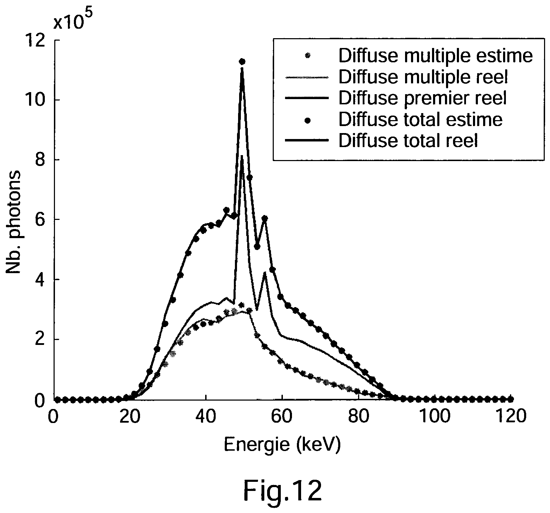

La figure 12 présente les résultats de la décomposition en diffusé premier et diffusé multiple d'un spectre de diffusion total obtenu avec du Delrin étudié à 3 cm de profondeur. Les résultats sont confrontés avec des données simulées du spectre de diffusion total, du spectre de diffusion premier, du spectre de diffusion multiple.

L'invention ne se limite pas au mode de réalisation décrit mais s'étend à toutes les variantes à la portée de l'homme du métier.

## Revendications

1. Procédé d'extraction d'un spectre de rayonnement diffusé premier (1100) hors d'un spectre de diffusion (1000) de rayonnement diffusé, selon un angle de diffusion, issu d'un matériau exposé (200) à un rayonnement incident (150) à travers une surface (210), le procédé comprenant l'application d'une fonction spectrale de réponse (3100, 3110) correspondant au spectre du rayonnement diffusé multiple lorsqu'on détecte un photon d'énergie donnée appartenant au spectre de diffusion premier, ladite fonction spectrale de réponse étant organisée sous forme d'une matrice (M), dite matrice de corrélation, dont chaque valeur $a_{ij}$ correspond au nombre de photons détectés, d'énergie $E_i$, constituant le rayonnement diffusé multiple, lorsqu'on détecte un photon, d'énergie $E_j$, du rayonnement diffusé premier, le procédé comprenant un processus itératif dont chaque pas comprend

   (1) une estimation du spectre de diffusion multiple par multiplication d'une estimation précédente du spectre de diffusion premier avec la matrice de corrélation ( $DM_k = M * DP_{k-1}$ ) et
   (2) une nouvelle estimation du spectre de diffusion premier, par soustraction dudit spectre de diffusion multiple estimé du spectre de diffusion détecté ($DP_k = DT - DM_k$ ).

2. Procédé d'extraction selon la revendication précédente, **caractérisé en ce que** ladite fonction spectrale de réponse fournit un spectre discrétisé sur un nombre fini de plages d'énergie.

3. Procédé d'extraction selon l'une des revendications précédentes, **caractérisé en ce que** ledit processus itératif est poursuivi jusqu'à la satisfaction d'un critère de convergence portant sur les spectres diffusés premiers estimés (3300) successifs.

4. Procédé d'extraction selon l'une des revendications précédentes, **caractérisé en ce que** la fonction spectrale de réponse (3100, 3110) est le résultat d'une interpolation d'une pluralité de fonctions spectrales de réponse à une exposition monochromatique de différents matériaux pour la profondeur donnée en considérant uniquement la densité du matériau.

5. Procédé d'extraction selon l'une des revendications précédentes, **caractérisé en ce que** la fonction spectrale de réponse (3100, 3110) est le résultat d'une interpolation d'une pluralité de fonctions spectrales de réponse à une exposition monochromatique du matériau pour différentes profondeurs.

6. Procédé d'extraction selon l'une des revendications précédentes, **caractérisé en ce que** la fonction spectrale de réponse (3100, 3110) est préalablement obtenue par une acquisition expérimentale d'une réponse à une exposition monochromatique du matériau pour la profondeur donnée.

7. Procédé d'extraction selon l'une des revendications précédentes, comprenant de plus une étape préliminaire d'estimation d'un premier spectre de rayonnement diffusé premier estimé, par multiplication d'un spectre de diffusion total mesuré par un coefficient multiplicatif dépendant de la profondeur d'inspection.

8. Procédé d'extraction selon l'une des revendications précédentes, **caractérisé en ce que** le rayonnement est un rayonnement X.

9. Dispositif d'extraction d'un spectre de rayonnement diffusé premier (1100) hors d'un spectre de diffusion (1000) d'un rayonnement diffusé par un matériau à analyser (200), le dispositif comprenant une source (100) de rayonnement incident (150) apte à irradier une surface (210) du matériau à analyser (200), un détecteur (300) apte à détecter le rayonnement diffusé par ledit matériau (200) selon au moins un angle de diffusion présélectionné, et des moyens d'application d'une fonction spectrale de réponse correspondant au spectre du rayonnement diffusé multiple lorsqu'on détecte un photon d'énergie donnée appartenant au spectre de diffusion premier, ladite fonction spectrale de réponse étant organisée sous forme d'une matrice (M), dite matrice de corrélation, dont chaque valeur $a_{ij}$ correspond au nombre de photons détectés, d'énergie $E_i$, constituant le rayonnement diffusé multiple, lorsqu'on détecte un photon, d'énergie $E_j$, du rayonnement diffusé premier, ces moyens d'application d'une fonction spectrale de réponse étant aptes à exécuter un processus itératif dont chaque pas comprend

(1) une estimation du spectre de diffusion multiple par multiplication d'une estimation précédente du spectre de diffusion premier avec la matrice de corrélation ( $DM_k = M * DP_{k-1}$ ) et
(2) une nouvelle estimation du spectre de diffusion premier, par soustraction dudit spectre de diffusion multiple estimé du spectre de diffusion détecté

$$(DP_k = DT - DM_k ).$$

10. Dispositif d'extraction de spectre selon la revendication 9, **caractérisé en ce que** la source (100, 110) de rayonnement et le détecteur (300, 310) sont tous deux fortement collimatés.

11. Dispositif d'extraction de spectre selon l'une des revendications précédentes, **caractérisé en ce que** le détecteur (300) est placé dans le même demi-espace que la source de rayonnement (100) vis-à-vis de la surface irradiée (210) du matériau à analyser.

12. Dispositif d'analyse spectrométrique comprenant un dispositif d'extraction de spectre de rayonnement diffusé premier selon l'une des revendications 9 à 11.

13. Programme d'ordinateur comprenant une suite d'instructions aptes, lorsqu'elles sont exécutées par un microprocesseur, à mettre en oeuvre un procédé selon l'une des revendications de procédé 1 à 8.

**Patentansprüche**

1. Verfahren zur Extraktion eines einfach gestreuten Strahlungsspektrums (1100) aus einem Streuungsspektrum (1000) von unter einem Streuungswinkel gestreuter Strahlung, die aus einem Material (200) stammt, das einer durch eine Fläche (210) einfallenden Strahlung (150) ausgesetzt wird, wobei das Verfahren das Anwenden einer spektralen Antwortfunktion (3100, 3110) umfasst, die dem Spektrum mehrfach gestreuter Strahlung entspricht, wenn ein dem einfach gestreuten Streuungsspektrum zugehöriges Photon vorgegebener Energie erfasst wird, wobei die spektrale Antwortfunktion in Form einer Matrix (M), Korrelationsmatrix genannt, eingerichtet wird, von der jeder Wert $a_{ij}$ der Anzahl erfasster Photonen mit der Energie $E_i$ entspricht, welche die mehrfach gestreute Strahlung bilden, wenn ein Photon der Energie $E_j$ aus der einfach gestreuten Strahlung erfasst wird, wobei das Verfahren einen iterativen Prozess umfasst, bei dem jeder Schritt umfasst:

(1) Abschätzen des mehrfachen Streuungsspektrums durch Multiplikation einer vorangehenden Abschätzung des einfachen Streuungsspektrums mit der Korrelationsmatrix ($DM_k = M * DP_{k-1}$) und
(2) erneutes Abschätzen des einfachen Streuungsspektrums durch Subtraktion des geschätzten, mehrfachen Streuungsspektrums vom erfassten Streuungsspektrum ($DP_k = DT - DM_k$).

2. Extraktionsverfahren nach dem vorangehenden Anspruch, **dadurch gekennzeichnet, dass** die spektrale Antwortfunktion ein über eine endliche Anzahl von Energiebereichen diskretisiertes Spektrum liefert.

3. Extraktionsverfahren nach einem der vorangehenden Ansprüche, **dadurch gekennzeichnet, dass** der iterative Prozess bis zur Erfüllung eines Konvergenzkriteriums bezüglich der aufeinanderfolgenden, geschätzten einfach gestreuten Spektren (3300) fortgesetzt wird.

4. Extraktionsverfahren nach einem der vorangehenden Ansprüche, **dadurch gekennzeichnet, dass** die spektrale Antwortfunktion (3100, 3110) das Ergebnis einer Interpolation einer Mehrzahl von spektralen Antwortfunktionen durch eine monochromatische Belichtung verschiedener Materialien bei der vorgegebenen Tiefe unter Berücksichtigung allein von der Materialdichte ist.

5. Extraktionsverfahren nach einem der vorangehenden Ansprüche, **dadurch gekennzeichnet, dass** die spektrale Antwortfunktion (3100, 3110) das Ergebnis einer Interpolation einer Mehrzahl von spektralen Antwortfunktionen durch eine monochromatische Belichtung des Materials bei verschiedenen Tiefen ist.

6. Extraktionsverfahren nach einem der vorangehenden Ansprüche, **dadurch gekennzeichnet, dass** die spektrale Antwortfunktion (3100, 3110) zuvor durch eine empirische Erfassung einer Reaktion auf eine monochromatische Belichtung des Materials bei vorgegebener Tiefe erhalten wird.

7. Extraktionsverfahren nach einem der vorangehenden Ansprüche, ferner umfassend einen vorangehenden Schritt des Abschätzens eines geschätzten, ersten einfach gestreuten Strahlungsspektrums durch Multiplikation eines gemessenen Gesamtstreuungsspektrums mit einem Multiplikationskoeffizienten, der von der Untersuchungstiefe abhängt.

8. Extraktionsverfahren nach einem der vorangehenden Ansprüche, **dadurch gekennzeichnet, dass** die Strahlung eine Röntgenstrahlung ist.

9. Vorrichtung zur Extraktion eines einfach gestreuten Strahlungsspektrums (1100) aus einem Streuungsspektrum (1000) einer von einem zu untersuchenden Material (200) gestreuten Strahlung, wobei die Vorrichtung eine Quelle (100) einfallender Strahlung (150) enthält, die dazu geeignet ist, eine Fläche (210) des zu untersuchenden Materials (200) zu bestrahlen, einen Sensor (300), der dazu geeignet ist, die Strahlung zu erfassen, die von dem Material (200) unter zumindest einem vorgewählten Streuungswinkel gestreut wird, sowie Anwendungsmittel zum Anwenden einer spektralen Antwortfunktion, die dem mehrfach gestreuten Strahlungsspektrum entspricht, wenn ein dem einfach gestreuten Streuungsspektrum zugehöriges Photon vorgegebener Energie erfasst wird, wobei die spektrale Antwortfunktion in Form einer Matrix (M), Korrelationsmatrix genannt, eingerichtet ist, von der jeder Wert $a_{ij}$ der Anzahl erfasster Photonen mit der Energie $E_i$ entspricht, welche die mehrfach gestreute Strahlung bilden, wenn ein Photon der Energie $E_j$ aus der einfach gestreuten Strahlung erfasst wird, wobei diese Anwendungsmittel zum Anwenden einer spektralen Antwortfunktion dazu geeignet sind, einen iterativen Prozess durchzuführen, bei dem jeder Schritt umfasst:

   (1) Abschätzen des mehrfachen Streuungsspektrums durch Multiplikation einer vorangehenden Abschätzung des einfachen Streuungsspektrums mit der Korrelationsmatrix ($DM_k = M * DP_{k-1}$) und
   (2) erneutes Abschätzen des einfachen Streuungsspektrums durch Subtraktion des geschätzten, mehrfachen Streuungsspektrums vom erfassten Streuungsspektrum ($DP_k = DT - DM_k$).

10. Spektrumsextraktionsvorrichtung nach Anspruch 9, **dadurch gekennzeichnet, dass** die Strahlungsquelle (100, 110) und der Sensor (300, 310) beide stark kollimiert sind.

11. Spektrumsextraktionsvorrichtung nach einem der vorangehenden Ansprüche, **dadurch gekennzeichnet, dass** der Sensor (300) in dem gleichen Halbraum angeordnet ist, wie die Strahlungsquelle (100) gegenüber der bestrahlten Fläche (210) des zu untersuchenden Materials.

12. Spektrometrische Untersuchungsvorrichtung mit einer Vorrichtung zur Extraktion eines einfach gestreuten Strahlungsspektrums nach einem der Ansprüche 9 bis 11.

13. Computerprogramm mit einer Folge von Anweisungen, die bei Ausführung auf einem Mikroprozessor dazu geeignet sind, ein Verfahren nach einem der Verfahrensansprüche 1 bis 8 durchzuführen.

**Claims**

1. A method for extracting a primary scattered radiation spectrum (1100) from a scattering spectrum (1000) of scattered radiation according to a scattering angle, coming from a material (200) exposed to an incident radiation (150) through a surface (210), the method comprising application of a spectral response function (3100, 3110) corresponding to the multiple scattered radiation spectrum when a photon with a given energy belonging to the primary scattered spectrum is detected, said spectral response function being organized in the form of a correlation matrix (M) of which each value $a_{ij}$ corresponds to the number of detected photons, with energy $E_i$, constituting the multiple scattered radiation, when a photon is detected, with energy $E_j$, of the primary scattered spectrum, the method comprising an iterative process of which each step comprises

   (1) an estimation of the multiple scattered spectrum by multiplying a preceding estimation of the primary scattered spectrum with the correlation matrix ( $DM_k = M * DP_{k-1}$ ) and
   (2) a new estimation of the primary scattered spectrum, by subtraction of said estimated multiple scattered spectrum from the detected scattering spectrum ( $DP_k = DT - DM_k$ ).

2. An extraction method according to the preceding claim, **characterized in that** said spectral response function supplies a discretized spectrum over a finite number of energy ranges.

3. An extraction method according to one of the preceding claims, **characterized in that** said iterative process is continued until a convergence criterion, which relates to the successive estimated primary scattered spectra (3300), is met.

4. An extraction method according to one of the preceding claims, **characterized in that** the spectral response function (3100, 3110) is the result of interpolating a plurality of spectral response functions to a monochromatic exposure of different materials for a given depth considering only the density of the material.

5. An extraction method according to one of the preceding claims, **characterized in that** the spectral response function (3100, 3110) is the result of interpolating a plurality of spectral response functions to a monochromatic exposure of the material for different depths.

6. An extraction method according to one of the preceding claims, **characterized in that** the spectral response function (3100, 3110) is obtained beforehand by experimental acquisition of a response to monochromatic exposure of the material for a given depth.

7. An extraction method according to one of the preceding claims, further comprising a step of preliminary estimation of a first estimated primary scattered radiation spectrum, carried out by multiplying a measured total scattering spectrum by a multiplication coefficient dependent on the inspection depth.

8. An extraction method according to one of the preceding claims, **characterized in that** the radiation is X-rays.

9. A device for extracting a primary scattered radiation spectrum (1100) from a scattering spectrum (1000) of a scattered radiation through a material to be analyzed (200), the device comprising: a source (100) of an incident radiation (150) adapted to irradiate a surface (210) of the material to be analyzed (200), a detector (300) adapted to detect the radiation scattered by said material (200) according to at least one preselected scattering angle, and means for applying a spectral response function corresponding to the multiple scattered radiation spectrum when a photon is detected with given energy belonging to the primary scattered radiation spectrum, said spectral response function being organized in the form of a correlation matrix (M) of which each value $a_{ij}$ corresponds to the number of detected photons, with energy $E_i$, constituting the multiple scattered radiation, when a photon of the primary scattered radiation is detected with energy $E_j$, these means for applying a spectral response function being suitable for executing an iterative process of which each step comprises

   (1) an estimation of the multiple scattered spectrum by multiplying a preceding estimation of the primary scattered spectrum with the correlation matrix ( $DM_k = M * DP_{k-1}$ ) and
   (2) a new estimation of the primary scattered spectrum, by subtraction of said estimated multiple scattered spectrum from the detected scattering spectrum ( $DP_k = DT - DM_k$ ).

10. A spectrum extracting device according to claim 9, **characterized in that** the radiation source (100, 110) and the detector (300, 310) are both strongly collimated.

11. A spectrum extracting device according to one of the preceding claims, **characterized in that** the detector (300) is placed in a same half-space as the radiation source (100) opposite the irradiated surface (210) of the material to analyze.

12. A device for spectrometry analysis comprising a device for extracting a spectrum of primary scattered radiation according to one of claims 9 to 11.

13. A computer program comprising a series of instructions adapted, when they are executed by a microprocessor, to implement a method according to one of the method claims 1 to 8.

Fig.1

Fig.2

Fig.3

Fig.4

Fig.5

## Fig.6

## Fig.7

## Fig.8

Fig.9

Fig.10

Fig.11

Fig.12

## RÉFÉRENCES CITÉES DANS LA DESCRIPTION

**Documents brevets cités dans la description**

- FR 0955011

- WO 2007007247 A